# EUROPEAN PATENT APPLICATION

(11) **EP 2 148 492 A1**
(43) Date of publication of application: **27.01.2010**
(21) Application number: 09162386.8
(22) Date of filing: 10.06.2009
(51) Int. Cl.: H04L 29/12, H04L 12/28

(54) **Apparatus and method for setting IP addresses in a mobile communication system**

(30) Priority: 22.07.2008 KR 20080070962
(71) Applicant: Samsung Electronics Co., Ltd., Suwon-si, Gyeonggi-do (KR)
(72) Inventor: Choi, Jong-Mu, Gyeonggi-do (KR); Kim, Jin-Yup, Gyeonggi-do (KR); Choi, Yong-Seock, Seoul (KR)
(74) Representative: Harrison Goddard Foote

(57) **Abstract**

An apparatus and method for setting a plurality of Internet Protocol (IP) address in a mobile communication system are provided. A method for using the plurality of IP addresses at a dual-mode terminal in the mobile communication system comprises determining whether a socket open is requested from an application program, when the socket open is requested, determining whether the application program is for a trusted-only network, when the application program is for the trusted-only network, selecting an access means from a plurality of access means for the trusted-only network, determining a corresponding IP address from a plurality of IP addresses using the selected access means, and binding a socket using the determined IP address.

## Description

### BACKGROUND OF THE INVENTION

### 1. Field of the Invention:

The present invention relates to an apparatus and a method for enabling a dual-mode terminal. More particularly, the present invention relates to an apparatus and a method for supporting both a wireless Local Area Network (LAN) communication and a cellular mobile communication using a plurality of Internet Protocol (IP) addresses for a plurality of access means, respectively.

### 2. Description of the Related Art:

In a socket layer and a Transmission Control Protocol (TCP)/Internet Protocol (IP) layer, their upper application layer typically performs operations relating to the socket call. The IP layer selects a source address (source IP) by referring to a routing table in order to transmit IP packets to a corresponding destination address (destination IP) at a terminal or a Personal Computer (PC) having a plurality of IPs.

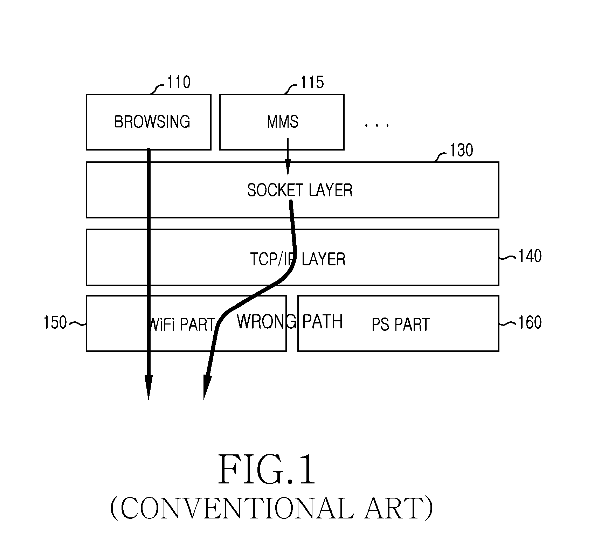

FIG. 1 illustrates a protocol stack structure including a conventional TCP/IP layer.

Referring to FIG. 1, the upper application layer (Browsing 110 and Multimedia Message Service (MMS) 115) calls a socket layer 130 for an IP communication. Next, the called socket layer 130 forwards received data to a TCP/IP layer 140 to generate the forwarded data as TCP/IP packets, and conducts a socket binding. The TCP/IP layer 140 retrieves a source address leading to a destination address of the data received from the upper layer from a stored routing table, and completes the TCP/IP packets. Next, the TCP/IP layer 140 forwards the completed TCP/IP packets to a Media Access Control (MAC) layer such as a wireless LAN (Wi-Fi) part 150 or a Packet Service (PS) part 160. The PS part 160 comprises the MAC layer for the mobile communication system.

When the above-stated technique is applied to a mobile communication terminal (a cellular phone), the following problems may be caused.

Servers for some IP application programs (e.g., MMS 115 and E-mail) used at the mobile communication terminal are located in a trusted domain of providers and block the access through a conventional IP network (belonging to a public domain) such as wireless Local Area Network (LAN) (Wi-Fi) part 150.

That is, when the source address is set to send the IP packet including an MMS packet through the wireless LAN (Wi-Fi) part 150, in the TCP/IP layer 140 of the mobile communication terminal, it is highly likely that the IP packet fails to arrive at the intended destination (the trusted domain).

For that reason, a dual-mode terminal may not access the server of the trusted domain while the wireless LAN (Wi-Fi) part 150 is activated (while accessing an Access Point (AP)). In other words, the dual-mode terminal may not use the MMS 115, the E-mail, and so forth, which require the access to the trusted domain, while using network service over the wireless LAN (Wi-Fi) part 150.

### SUMMARY OF THE INVENTION

An aspect of the present invention is to address at least the above-mentioned problems and/or disadvantages and to provide at least the advantages described below. Accordingly, an aspect of the present invention is to provide an apparatus and a method for setting a plurality of IP addresses in a mobile communication system.

Another aspect of the present invention is to provide an apparatus and a method for addressing restriction of concurrent multi-IP accesses in a mobile communication system.

Yet another aspect of the present invention is to provide an apparatus and a method for enabling a dual-mode terminal of a mobile communication system to access a server of a secured domain over a mobile communication network even when a wireless LAN is active.

According to an aspect of the present invention, a method for using a plurality of Internet Protocol (IP) addresses at a dual-mode terminal in a mobile communication system is provided. The method comprises determining whether a socket open is requested from an application program, when the socket open is requested, determining whether the application program is for a trusted-only network, when the application program is for the trusted-only network, selecting an access means from a plurality of access means for the trusted-only network, determining a corresponding IP address from a plurality of IP addresses using the selected access means, and binding a socket using the determined IP address.

According to another aspect of the present invention, an apparatus of a dual-mode terminal using a plurality of IP addresses in a mobile communication system is provided. The apparatus comprises a controller for determining whether a socket open is requested from an application program, for determining whether the application program is for a trusted-only network when the socket open is requested, for selecting an access means from a plurality of access means for the trusted-only network when the application program is for the trusted-only network, for determining a corresponding IP address from a plurality of IP addresses using the selected access means, and for binding a socket using the determined IP address.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will become more apparent from the following detailed description taken in conjunction with the accompanying drawings, in which:

FIG. 1 illustrates a conventional protocol stack structure including a Transmission Control Protocol (TCP)/ Internet Protocol (IP);

FIG. 2 illustrates a protocol stack structure including a connection manager according to an exemplary embodiment of the present invention;

FIG. 3 illustrates a protocol stack structure including an IP application service layer according to an exemplary embodiment of the present invention;

FIG. 4 illustrates operations when a connection manager is employed according to an exemplary embodiment of the present invention;

FIG. 5 illustrates operations when an application service layer is employed according to an exemplary embodiment of the present invention; and

FIG. 6 illustrates a dual-mode terminal according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein may be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" comprise plural referents unless the context clearly dictates otherwise. Thus, for example, reference to "a component surface" comprises reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Exemplary embodiments of the present invention provide an apparatus and a method for setting a plurality of Internet Protocol (IP) addresses in a mobile communication system.

According to an exemplary embodiment of the present invention, application programs may be categorized into three types. First, application programs using a trusted-only network access only over the trusted-only network such as Multimedia Message Service (MMS). Second, dual accessible application programs access over any network regardless of the public or trusted network such as a browser. Last, public only application programs access only through the public network.

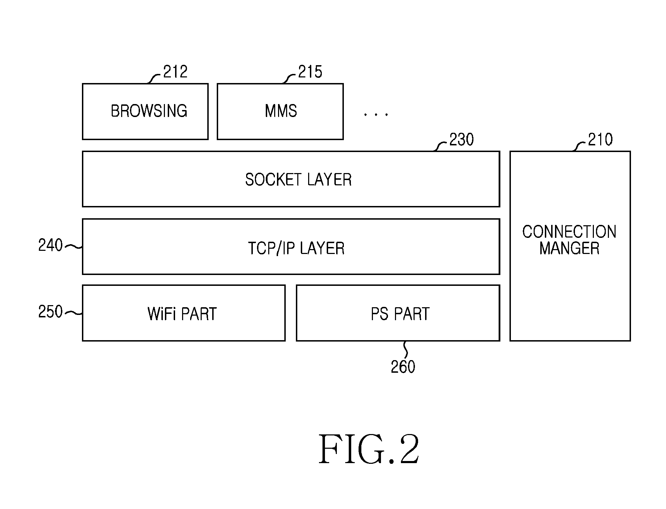

FIG. 2 illustrates a protocol stack structure including a connection manager according to an exemplary embodiment of the present invention.

Referring to FIG. 2, the protocol stack of a dual-mode terminal comprises application programs (browsing 212 and MMS 215), a socket layer 230, and a Transmission Control Protocol (TCP)/Internet Protocol (IP) layer 240. Further, the protocol stack of the dual-mode terminal comprises a wireless Local Area Network (LAN) (Wi-Fi) part 250 for the network access, a mobile communication network (Packet Service (PS)) part 260, and a connection manager 210 for managing the connection between the access networks (Wi-Fi and PS ).

In this exemplary embodiment of the present invention, to select a source IP address (a sender IP address) based on a routing table in the TCP/IP layer 240, the connection manager 210 selects an address per application program.

Packet segmentation and a source address according to the application program are determined by the connection manager 210. The connection manager 210 determines a specific access means per application program by controlling the socket layer 230 and the TCP/IP layer 240, and controls to bind the socket to an IP address allocated to the specific access means.

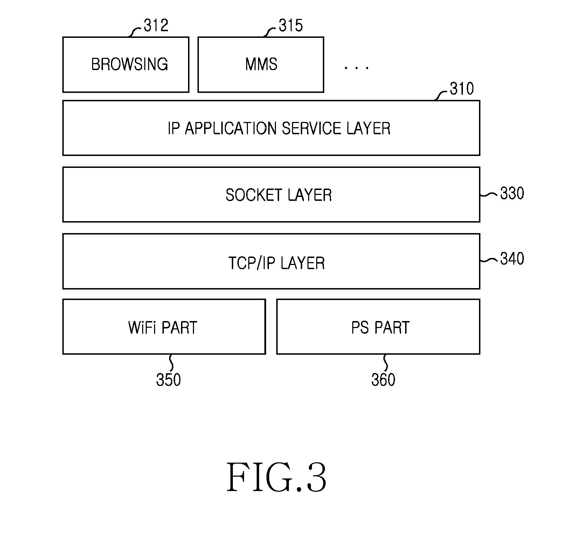

FIG. 3 illustrates a protocol stack structure including an IP application service layer according to an exemplary embodiment of the present invention.

Referring to FIG. 3, the protocol stack structure of the dual-mode terminal comprises application programs (browsing 312 and MMS 315), a socket layer 330, and a TCP/IP layer 340. The protocol stack structure of the dual-mode terminal further comprises a wireless LAN (Wi-Fi) part 330 for the network access, a mobile communication network (PS) part 340 , and an IP application service layer 310 for managing the IP connection between the access networks (Wi-Fi and PS).

The IP application service layer 310 functions as the connection manager 210 of FIG. 2. That is, when the TCP/IP layer 340 selects a source IP address based on a routing table, the source IP address is distinguished and selected per application program under the control of the IP application service layer 310. The IP application service layer 310 determines a specific access means per application program by controlling the socket layer 330 and the TCP/IP layer 340, and controls to bind the socket to an IP address allocated to the specific access means.

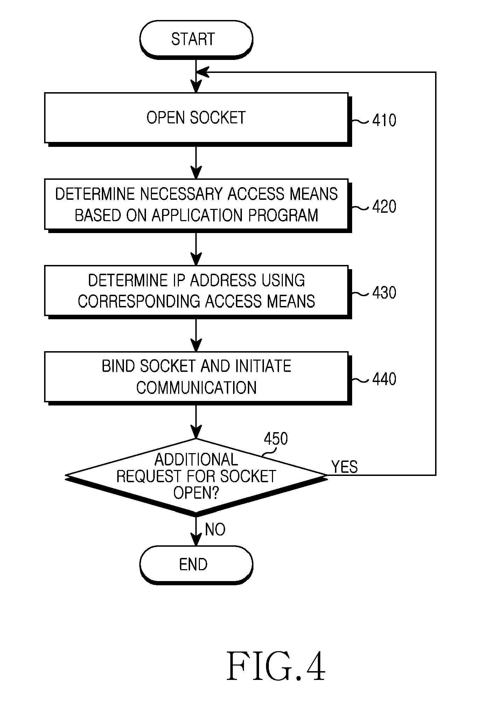

FIG. 4 illustrates a flowchart outlining operations when a connection manager is employed according to an exemplary embodiment of the present invention.

Referring to FIG. 4, the connection manager of the dual-mode terminal opens the socket in step 410. The socket may be opened by driving a certain application program. Next, the connection manager determines a necessary access means according to the certain application program in step 420.

In step 430, the connection manager determines an IP address using the corresponding access means by controlling the TCP/IP layer. In so doing, the TCP/IP layer may determine the IP address. Alternatively, the IP address pre-determined using the corresponding access means may be utilized.

In step 440, the connection manager controls the socket and binds the socket using the determined IP address, and the certain application program initiates the communication.

If another application program is executed and attempts the socket open in step 450, the process returns to step 410.

When the certain application program is trusted-only, the connection manager examines the connection state (e.g., Packet Data Protocol (PDP) context activation) of the layer currently accessible to the trusted-only network and determines the corresponding IP address.

When the certain application program is dual accessible, the connection manager determines a connection state of the access layer preferred by the current user and determines the corresponding IP address.

The determined IP address is used as a sender IP address. The sender IP address is explicitly associated with the corresponding socket through the socket binding.

As such, even when every access means is activated, the application program may be serviced using the plurality of the IP addresses at the same time.

Next, the connection manager finishes this process.

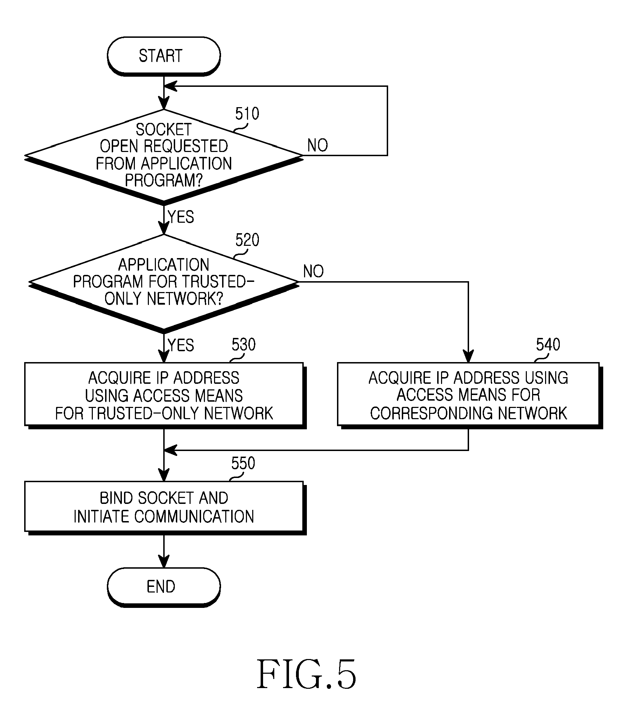

FIG. 5 illustrates a flowchart outlining operations when an application service layer is employed according to an exemplary embodiment of the present invention.

Referring to FIG. 5, when the socket open is requested from a certain application program in step 510, the IP application service layer examines whether the certain application program is for the trusted-only network in step 520.

When the certain application program is for the trusted-only network, the IP application service layer determines the IP address using the access means for the trusted-only network in step 530.

In step 550, the IP application service layer controls the socket to bind the socket using the determined IP address, and the certain application program initiates the communication after the socket binding.

In contrast, when the certain application program is not for the trusted-only network, the IP application service layer determines the IP address using the access means for the corresponding network in step 540.

In step 550, the IP application service layer controls the socket to bind the socket using the determined IP address, and the certain application program initiates the communication after the socket binding.

Next, the IP application service layer finishes this process.

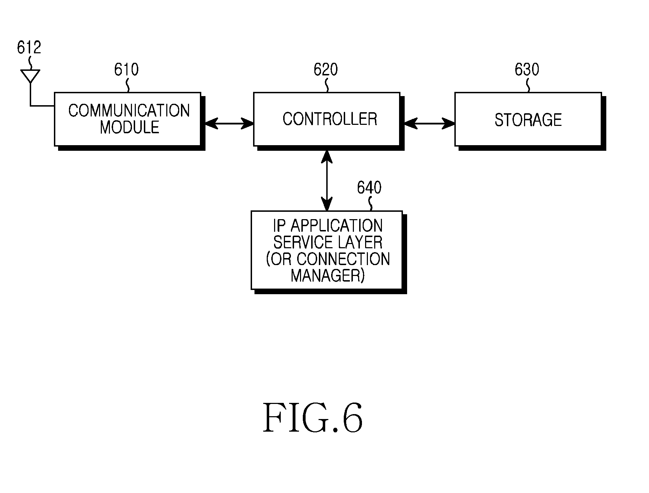

FIG. 6 illustrates a block diagram of the dual-mode terminal according to an exemplary embodiment of the present invention.

Referring to FIG. 6, the dual-mode terminal comprises a communication module 610, a controller 620, a storage 630, and an IP application service layer (or a connection manager) 640.

The communication module 610 communicates with other nodes and comprises a wireless processor (not shown) and a baseband processor (not shown). The wireless processor converts a signal received over an antenna 612 to a baseband signal and outputs the baseband signal to the baseband processor. Also, the wireless processor converts a baseband signal output from the baseband processor to a radio signal transmittable over the air and transmits the radio signal via the antenna 612.

The controller 620 controls operations of the terminal. Herein, the controller 620 controls the IP application service layer (or the connection manager) 640.

The storage 630 stores programs for controlling the operations of the terminal, and data temporarily generated through the program execution.

When the IP application service layer (or the connection manager) 640 serves as the IP application service layer and the socket open is requested from the certain application program, it is determined whether the certain application program is for the trusted-only network. When the certain application program is for the trusted-only network, the IP application service layer 640 determines the IP address using the access means for the trusted-only network. The IP application service layer 640 controls the socket to bind the socket using the determined IP address. After the socket binding, the certain application program initiates the communication. When the certain application program is not for the trusted-only network, the IP application service layer 640 determines the IP address using the access means for the corresponding network. Next, the IP application service layer 640 controls the socket to bind the socket using the determined IP address. After the socket binding, the certain application program initiates the communication.

When the IP application service layer (or the connection manager) 640 serves as the connection manager, it determines the necessary access means according to the certain application program. Next, the connection manager 640 determines the IP address using the corresponding access means by controlling the TCP/IP layer. In so doing, the TCP/IP layer may determine the IP address. Alternatively, the IP address pre-determined using the corresponding access means may be utilized. The connection manager 640 controls the socket and binds the socket using the determined IP address, and the certain application program initiates the communication.

As constructed above, the controller 620 may serve as the IP application service layer (or the connection manager) 640. Herein, they are separately illustrated to distinguish their functions.

In an exemplary implementation, the controller 620 may process all or part of the functions of the IP application service layer (or the connection manager) 640.

As set forth above, even when the wireless LAN is in use, the dual-mode terminal may access the server of the secured domain of the mobile communication system. Therefore, the user's satisfaction may be maximized and the IP address may be assigned to every access means of the dual-mode terminal.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for using a plurality of Internet Protocol (IP) addresses at a dual-mode terminal in a mobile communication system, the method comprising:
determining whether a socket open is requested from an application program;
determining whether the application program is for a trusted-only network, when the socket open is requested;
selecting an access means from a plurality of access means for the trusted-only network, when the application program is for the trusted-only network;
determining a corresponding IP address from a plurality of IP addresses using the selected access means; and
binding a socket using the determined IP address.

2. The method of claim 1, further comprising:
selecting an access means from the plurality of access means accessible by the application program, when the application program is not for the trusted-only network.

3. The method of claim 2, further comprising:
determining a corresponding IP address from the plurality of IP addresses using an access means accessible by another application program when the socket open is requested from the other application program; and
binding the socket using the determined IP address.

4. An apparatus of a dual-mode terminal using a plurality of Internet Protocol (IP) addresses in a mobile communication system, the apparatus comprising:
a controller (620) for determining whether a socket open is requested from an application program, for determining whether the application program is for a trusted-only network when the socket open is requested, for selecting an access means from a plurality of access means for the trusted-only network when the application program is for the trusted-only network, for determining a corresponding IP address from a plurality of IP addresses using the selected access means, and for binding a socket using the determined IP address.

5. The apparatus of claim 4, wherein, the controller (620) selects an access means from the plurality of access means accessible by the application program when the application program is not for the trusted-only network.

6. The apparatus of claim 5, wherein, the controller (620) determines an IP address from the plurality of IP addresses using an access means accessible by another application program when the socket open is requested from the other application program and the controller (620) binds the socket using the determined IP address.
